# EUROPEAN PATENT APPLICATION

(11) **EP 4 507 369 A1**
(43) Date of publication of application: **12.02.2025**
(21) Application number: 24192053.7
(22) Date of filing: 31.07.2024
(51) Int. Cl.: H04W 28/02

(54) **SYSTEMS AND METHODS FOR TRAFFIC FLOW SHAPING**

(30) Priority: 10.08.2023 US 202363531917 P; 09.07.2024 US 202418767541
(71) Applicant: Meta Platforms Technologies, LLC, Menlo Park, CA 94025 (US)
(72) Inventor: Yu, Liwen, Menlo Park (US); Wong, Curt, Menlo Park (US); Ji, Zhu, Menlo Park (US); Lim, Suhwan, Menlo Park (US)
(74) Representative: Murgitroyd & Company

(57) **Abstract**

Systems and methods for traffic flow shaping may include user equipment (UE) which determines, for a plurality of traffic flows, a respective set of statistical parameters for communication with a base station. The traffic flows may correspond to an application supported by the UE. The UE may transmit, to the base station, one or more messages indicating the statistical parameters for the plurality of traffic flows in a UE assistance information (UAI) signaling.

## Description

### FIELD OF DISCLOSURE

The present disclosure is generally related to wireless communication between devices, including but not limited to, systems and methods for traffic flow shaping.

### BACKGROUND

Augmented reality (AR), virtual reality (VR), and mixed reality (MR) are becoming more prevalent, which such technology being supported across a wider variety of platforms and device. Some AR/VR/MR devices may communicate with other devices within an environment via various cellular connections or links.

### SUMMARY

According to a first aspect, there is provided a method, comprising: determining, by a user equipment (UE), for a plurality of traffic flows, a respective set of statistical parameters for communication with a base station, the plurality of traffic flows corresponding to an application supported by the UE; and transmitting, by the UE, to the base station, one or more messages indicating the statistical parameters for the plurality of traffic flows in a UE assistance information (UAI) signaling.

In some embodiments, the plurality of traffic flows comprise traffic flows grouped together into sets of traffic flows according to at least one of traffic characteristics or transmission conditions, for traffic to be sent on the traffic flows included in a set.

In some embodiments, the traffic characteristics comprise at least one of a traffic type, a data rate, a data burstiness, or a data periodicity, and the transmission conditions comprise at least one of a latency condition, a packet loss condition, a power consumption condition, or a jitter condition.

In some embodiments, the UE determines the statistical parameters according to a type of the application supported by the UE.

In some embodiments, statistical parameters of the plurality of traffic flows for a first application supported by the UE, is different from statistical parameters of the plurality of traffic flows for a second application supported by the UE.

In some embodiments, the plurality of traffic flows comprises a first set of one or more traffic flows and a second set of one or more traffic flows.

In some embodiments, the statistical parameters for the first set are different from the statistical parameters for the second set.

In some embodiments, a first set of the statistical parameters is determined for a first set of traffic flows of the plurality of traffic flows, and a second set of statistical parameters is determined for a second set of traffic flows of the plurality of traffic flows.

In some embodiments, the statistical parameters comprise at least one of a periodicity, a jitter range, a preferred connected mode discontinuous reception periodicity, a preferred uplink configuration grant offset, one or more forward error correction parameters, or one or more preferred packet data convergence protocol (PDCP) duplication configuration parameters.

In some embodiments, a first set of statistical parameters for a first set of the plurality of traffic flows comprise a respective periodicity, a respective jitter range, and a preferred connected mode discontinuous reception periodicity, a second set of statistical parameters for a second set of the plurality of traffic flows comprise a respective periodicity, a respective jitter range, and a preferred uplink configuration grant offset, and a third set of statistical parameters for a third set of the plurality of traffic flows comprise one or more forward error correction parameters and one or more preferred packet data convergence protocol (PDCP) duplication configuration parameters.

According to a further aspect, there is provided a wireless communication device, comprising: a wireless transceiver; and one or more processors configured to: determine, for a plurality of traffic flows, a respective set of statistical parameters for communication with a base station, the plurality of traffic flows corresponding to an application supported by the wireless communication device; and transmit, via the wireless transceiver, to the base station, one or more messages indicating the statistical parameters for the plurality of traffic flows in a user equipment (UE) assistance information (UAI) signaling.

In some embodiments, the plurality of traffic flows comprise traffic flows grouped together into sets of traffic flows according to at least one of traffic characteristics or transmission conditions, for traffic to be sent on the traffic flows included in a set.

In some embodiments, the traffic characteristics comprise at least one of a traffic type, a data rate, a data burstiness, or a data periodicity, and the transmission conditions comprise at least one of a latency condition, a packet loss condition, a power consumption condition, or a jitter condition.

In some embodiments, the one or more processors determine the statistical parameters according to a type of the application supported by the wireless communication device.

In some embodiments, statistical parameters of the plurality of traffic flows for a first application supported by the wireless communication device, is different from statistical parameters of the plurality of traffic flows for a second application supported by the wireless communication device.

In some embodiments, the plurality of traffic flows comprises a first set of one or more traffic flows and a second set of one or more traffic flows.

In some embodiments, the statistical parameters for the first set are different from the statistical parameters for the second set.

In some embodiments, a first set of the statistical parameters is determined for a first set of traffic flows of the plurality of traffic flows, and a second set of statistical parameters is determined for a second set of traffic flows of the plurality of traffic flows.

In some embodiments, the statistical parameters comprise at least one of a periodicity, a jitter range, a preferred connected mode discontinuous reception periodicity, a preferred uplink configuration grant offset, one or more forward error correction parameters, or one or more preferred packet data convergence protocol (PDCP) duplication configuration parameters.

According to a further aspect, there is provided a base station, comprising: a wireless transceiver; and one or more processors configured to: receive, via the wireless transceiver, from user equipment (UE), one or more messages indicating statistical parameters for a plurality of traffic flows in a UE assistance information (UAI) signaling, wherein the statistical parameters are for communication between the UE and the base station, and wherein the plurality of traffic flows correspond to an application supported by the UE.

### BRIEF DESCRIPTION OF THE DRAWINGS

The accompanying drawings are not intended to be drawn to scale. Like reference numbers and designations in the various drawings indicate like elements. For purposes of clarity, not every component can be labeled in every drawing.
FIG. 1 is a diagram of an example wireless communication system, according to an example implementation of the present disclosure.
FIG. 2 is a diagram of a console and a head wearable display for presenting augmented reality or virtual reality, according to an example implementation of the present disclosure.
FIG. 3 is a diagram of a head wearable display, according to an example implementation of the present disclosure.
FIG. 4 is a block diagram of a computing environment according to an example implementation of the present disclosure.
FIG. 5 is a block diagram of a system for traffic flow shaping, according to an example implementation of the present disclosure.
FIG. 6 is a process flow showing an example of determining statistical parameters for traffic flows, according to an example implementation of the present disclosure.
FIG. 7 is a flowchart showing an example method of traffic flow shaping, according to an example implementation of the present disclosure.

### DETAILED DESCRIPTION

Before turning to the figures, which illustrate certain embodiments in detail, it should be understood that the present disclosure is not limited to the details or methodology set forth in the description or illustrated in the figures. It should also be understood that the terminology used herein is for the purpose of description only and should not be regarded as limiting.

Referring generally to the FIGURES, the systems and methods described herein relate to traffic flow shaping between user equipment (UE) and a base station. UE assistance information (UAI) may include a mechanism by which a UE can inform a base station or network with information (e.g., status information) so that the network can allocate resources to UEs accordingly. For extended reality (XR) applications or services (e.g., augmented reality, virtual reality, etc.), traffic flows associated with such services may have unique characteristics and transmission specifications or properties (e.g., statistical parameters). Such characteristics may include data rates, burstiness, periodicity, and such transmission properties may include latency, packet loss, power consumption, and so forth. In various implementations, uplink (UL) traffic may be a bottleneck, which can cause traffic congestion, increased latency, packet dropping, etc.

According to the systems and methods described herein, a UE can map XR UL statistical parameters of UL traffic to a set of UAI parameters for UAI signaling, and transmit the UAI signaling to the base station. The base station can then allocate resources to the UE according to the UAI signaling. For example, the UE can identify or determine UL traffic flows which are to be used for a given application or resource executing on / supported by the UE. The UE can determine one or more classifications / categories for the UL traffic flows. The UE can determine, for the traffic flows, a set of statistical information / properties / parameters relating to the traffic flows. The UE can report the set of statistical parameters to the base station as part of a UAI signaling. The base station can allocate resources to the UE (e.g., to specific traffic flows) based on the UAI signaling. Such implementations and embodiments can improve the efficiency of resource allocation by a base station, limit latency, and provide better support for XR applications or resources.

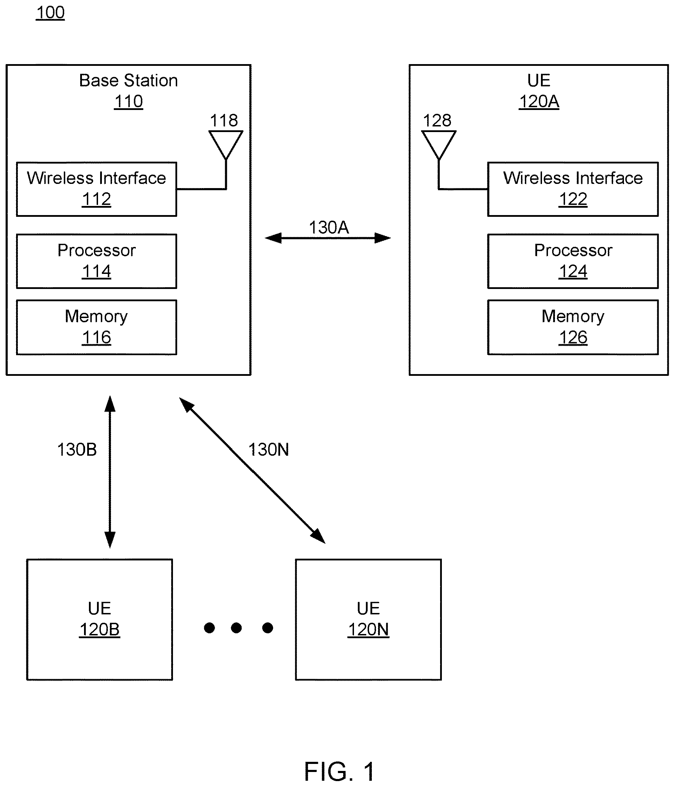

FIG. 1 illustrates an example wireless communication system 100. The wireless communication system 100 may include a base station 110 (also referred to as "a wireless communication node 110" or "a station 110") and one or more user equipment (UEs) 120A, 120B, 120N (also referred to as "wireless communication devices 120A, 120B, 120N" or "terminal devices 120A, 120B, 120N"). The base station 110 and the UEs 120A, 120B, 120N may communicate through wireless commination links 130A, 130B, 130N. The wireless communication link 130A, 130B, 130N may be a cellular communication link conforming to 3G, 4G, 5G or other cellular communication protocols or a Wi-Fi communication protocol. In one example, the wireless communication link 130A, 130B, 130N supports, employs or is based on an orthogonal frequency division multiple access (OFDMA). In one aspect, the UEs 120A, 120B, 120N are located within a geographical boundary with respect to the base station 110, and may communicate with or through the base station 110. In some embodiments, the wireless communication system 100 includes more, fewer, or different components than shown in FIG. 1. For example, the wireless communication system 100 may include one or more additional base stations 110 than shown in FIG. 1.

In some embodiments, the UE 120A, 120B, 120N may be a user device such as a mobile phone, a smart phone, a personal digital assistant (PDA), tablet, laptop computer, wearable computing device, etc. Each UE 120A, 120B, 120N may communicate with the base station 110 through a corresponding communication link 130A, 130B, 130N. For example, the UE 120A, 120B, 120N may transmit data to a base station 110 through a wireless communication link 130A, 130B, 130N, and receive data from the base station 110 through the wireless communication link 130A, 130B, 130N. Example data may include audio data, image data, text, etc. Communication or transmission of data by the UE 120A, 120B, 120N to the base station 110 may be referred to as an uplink communication. Communication or reception of data by the UE 120A, 120B, 120N from the base station 110 may be referred to as a downlink communication. In some embodiments, the UE 120A includes a wireless interface 122, a processor 124, a memory device 126, and one or more antennas 128. These components may be embodied as hardware, software, firmware, or a combination thereof. In some embodiments, the UE 120A includes more, fewer, or different components than shown in FIG. 1. For example, the UE 120A, 120B, 120N may include an electronic display and/or an input device. For example, the UE 120A, 120B, 120N may include additional antennas 128 and wireless interfaces 122 than shown in FIG. 1.

The antenna 128 may be a component that receives a radio frequency (RF) signal and/or transmit a RF signal through a wireless medium. The RF signal may be at a frequency between 200 MHz to 100 GHz. The RF signal may have packets, symbols, or frames corresponding to data for communication. The antenna 128 may be a dipole antenna, a patch antenna, a ring antenna, or any suitable antenna for wireless communication. In one aspect, a single antenna 128 is utilized for both transmitting the RF signal and receiving the RF signal. In one aspect, different antennas 128 are utilized for transmitting the RF signal and receiving the RF signal. In one aspect, multiple antennas 128 are utilized to support multiple-in, multiple-out (MIMO) communication.

The wireless interface 122 includes or is embodied as a transceiver for transmitting and receiving RF signals through a wireless medium. The wireless interface 122 may communicate with a wireless interface 112 of the base station 110 through a wireless communication link 130A. In one configuration, the wireless interface 122 is coupled to one or more antennas 128. In one aspect, the wireless interface 122 may receive the RF signal at the RF frequency received through antenna 128, and downconvert the RF signal to a baseband frequency (e.g., 0~1 GHz). The wireless interface 122 may provide the downconverted signal to the processor 124. In one aspect, the wireless interface 122 may receive a baseband signal for transmission at a baseband frequency from the processor 124, and upconvert the baseband signal to generate a RF signal. The wireless interface 122 may transmit the RF signal through the antenna 128.

The processor 124 is a component that processes data. The processor 124 may be embodied as field programmable gate array (FPGA), application specific integrated circuit (ASIC), a logic circuit, etc. The processor 124 may obtain instructions from the memory device 126, and executes the instructions. In one aspect, the processor 124 may receive downconverted data at the baseband frequency from the wireless interface 122, and decode or process the downconverted data. For example, the processor 124 may generate audio data or image data according to the downconverted data, and present an audio indicated by the audio data and/or an image indicated by the image data to a user of the UE 120A. In one aspect, the processor 124 may generate or obtain data for transmission at the baseband frequency, and encode or process the data. For example, the processor 124 may encode or process image data or audio data at the baseband frequency, and provide the encoded or processed data to the wireless interface 122 for transmission.

The memory device 126 is a component that stores data. The memory device 126 may be embodied as random access memory (RAM), flash memory, read only memory (ROM), erasable programmable read-only memory (EPROM), electrically erasable programmable read-only memory (EEPROM), registers, a hard disk, a removable disk, a CD-ROM, or any device capable for storing data. The memory device 126 may be embodied as a non-transitory computer readable medium storing instructions executable by the processor 124 to perform various functions of the UE 120A disclosed herein. In some embodiments, the memory device 126 and the processor 124 are integrated as a single component.

In some embodiments, each of the UEs 120B... 120N includes similar components of the UE 120A to communicate with the base station 110. Thus, detailed description of duplicated portion thereof is omitted herein for the sake of brevity.

In some embodiments, the base station 110 may be an evolved node B (eNB), a serving eNB, a target eNB, a femto station, or a pico station. The base station 110 may be communicatively coupled to another base station 110 or other communication devices through a wireless communication link and/or a wired communication link. The base station 110 may receive data (or a RF signal) in an uplink communication from a UE 120A, 120B, 120N. Additionally or alternatively, the base station 110 may provide data to another UE 120A, 120B, 120N, another base station, or another communication device. Hence, the base station 110 allows communication among UEs 120A, 120B, 120N associated with the base station 110, or other UEs associated with different base stations. In some embodiments, the base station 110 includes a wireless interface 112, a processor 114, a memory device 116, and one or more antennas 118. These components may be embodied as hardware, software, firmware, or a combination thereof. In some embodiments, the base station 110 includes more, fewer, or different components than shown in FIG. 1. For example, the base station 110 may include an electronic display and/or an input device. For example, the base station 110 may include additional antennas 118 and wireless interfaces 112 than shown in FIG. 1.

The antenna 118 may be a component that receives a radio frequency (RF) signal and/or transmit a RF signal through a wireless medium. The antenna 118 may be a dipole antenna, a patch antenna, a ring antenna, or any suitable antenna for wireless communication. In one aspect, a single antenna 118 is utilized for both transmitting the RF signal and receiving the RF signal. In one aspect, different antennas 118 are utilized for transmitting the RF signal and receiving the RF signal. In one aspect, multiple antennas 118 are utilized to support multiple-in, multiple-out (MIMO) communication.

The wireless interface 112 includes or is embodied as a transceiver for transmitting and receiving RF signals through a wireless medium. The wireless interface 112 may communicate with a wireless interface 122 of the UE 120A through a wireless communication link 130A. In one configuration, the wireless interface 112 is coupled to one or more antennas 118. In one aspect, the wireless interface 112 may receive the RF signal at the RF frequency received through antenna 118, and downconvert the RF signal to a baseband frequency (e.g., 0~1 GHz). The wireless interface 112 may provide the downconverted signal to the processor 124. In one aspect, the wireless interface 122 may receive a baseband signal for transmission at a baseband frequency from the processor 114, and upconvert the baseband signal to generate a RF signal. The wireless interface 112 may transmit the RF signal through the antenna 118.

The processor 114 is a component that processes data. The processor 114 may be embodied as FPGA, ASIC, a logic circuit, etc. The processor 114 may obtain instructions from the memory device 116, and executes the instructions. In one aspect, the processor 114 may receive downconverted data at the baseband frequency from the wireless interface 112, and decode or process the downconverted data. For example, the processor 114 may generate audio data or image data according to the downconverted data. In one aspect, the processor 114 may generate or obtain data for transmission at the baseband frequency, and encode or process the data. For example, the processor 114 may encode or process image data or audio data at the baseband frequency, and provide the encoded or processed data to the wireless interface 112 for transmission. In one aspect, the processor 114 may set, assign, schedule, or allocate communication resources for different UEs 120A, 120B, 120N. For example, the processor 114 may set different modulation schemes, time slots, channels, frequency bands, etc. for UEs 120A, 120B, 120N to avoid interference. The processor 114 may generate data (or UL CGs) indicating configuration of communication resources, and provide the data (or UL CGs) to the wireless interface 112 for transmission to the UEs 120A, 120B, 120N.

The memory device 116 is a component that stores data. The memory device 116 may be embodied as RAM, flash memory, ROM, EPROM, EEPROM, registers, a hard disk, a removable disk, a CD-ROM, or any device capable for storing data. The memory device 116 may be embodied as a non-transitory computer readable medium storing instructions executable by the processor 114 to perform various functions of the base station 110 disclosed herein. In some embodiments, the memory device 116 and the processor 114 are integrated as a single component.

In some embodiments, communication between the base station 110 and the UE 120A, 120B, 120N is based on one or more layers of Open Systems Interconnection (OSI) model. The OSI model may include layers including: a physical layer, a Medium Access Control (MAC) layer, a Radio Link Control (RLC) layer, a Packet Data Convergence Protocol (PDCP) layer, a Radio Resource Control (RRC) layer, a Non Access Stratum (NAS) layer or an Internet Protocol (IP) layer, and other layer.

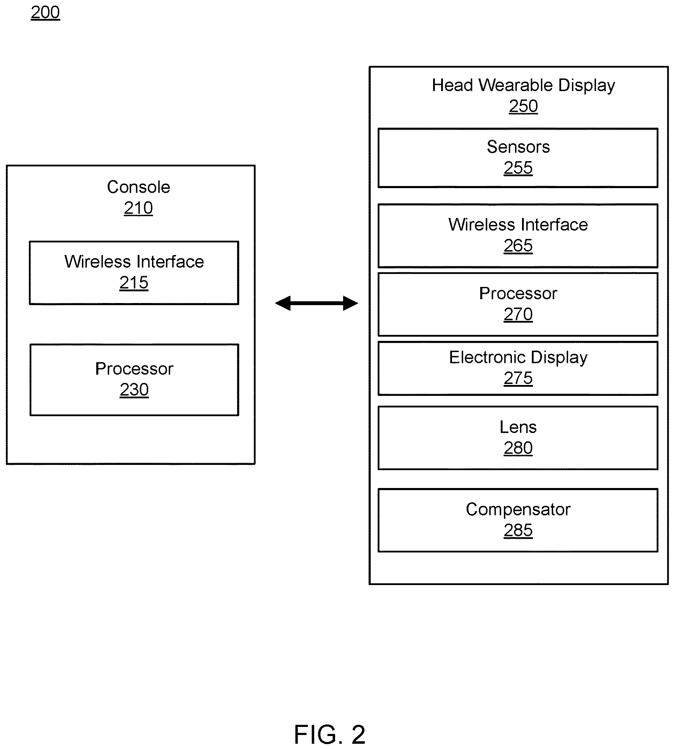

FIG. 2 is a block diagram of an example artificial reality system environment 200. In some embodiments, the artificial reality system environment 200 includes a HWD 250 worn by a user, and a console 210 providing content of artificial reality (e.g., augmented reality, virtual reality, mixed reality) to the HWD 250. Each of the HWD 250 and the console 210 may be a separate UE 120A, 120B, 120N. The HWD 250 may be referred to as, include, or be part of a head mounted display (HMD), head mounted device (HMD), head wearable device (HWD), head worn display (HWD), or head worn device (HWD). The HWD 250 may detect its location and/or orientation of the HWD 250 as well as a shape, location, and/or an orientation of the body/hand/face of the user, and provide the detected location/or orientation of the HWD 250 and/or tracking information indicating the shape, location, and/or orientation of the body/hand/face to the console 210. The console 210 may generate image data indicating an image of the artificial reality according to the detected location and/or orientation of the HWD 250, the detected shape, location and/or orientation of the body/hand/face of the user, and/or a user input for the artificial reality, and transmit the image data to the HWD 250 for presentation. In some embodiments, the artificial reality system environment 200 includes more, fewer, or different components than shown in FIG. 2. In some embodiments, functionality of one or more components of the artificial reality system environment 200 can be distributed among the components in a different manner than is described here. For example, some of the functionality of the console 210 may be performed by the HWD 250. For example, some of the functionality of the HWD 250 may be performed by the console 210. In some embodiments, the console 210 is integrated as part of the HWD 250.

In some embodiments, the HWD 250 is an electronic component that can be worn by a user and can present or provide an artificial reality experience to the user. The HWD 250 may render one or more images, video, audio, or some combination thereof to provide the artificial reality experience to the user. In some embodiments, audio is presented via an external device (e.g., speakers and/or headphones) that receives audio information from the HWD 250, the console 210, or both, and presents audio based on the audio information. In some embodiments, the HWD 250 includes sensors 255, a wireless interface 265, a processor 270, an electronic display 275, a lens 280, and a compensator 285. These components may operate together to detect a location of the HWD 250 and a gaze direction of the user wearing the HWD 250, and render an image of a view within the artificial reality corresponding to the detected location and/or orientation of the HWD 250. In other embodiments, the HWD 250 includes more, fewer, or different components than shown in FIG. 2.

In some embodiments, the sensors 255 include electronic components or a combination of electronic components and software components that detect a location and an orientation of the HWD 250. Examples of the sensors 255 can include: one or more imaging sensors, one or more accelerometers, one or more gyroscopes, one or more magnetometers, or another suitable type of sensor that detects motion and/or location. For example, one or more accelerometers can measure translational movement (e.g., forward/back, up/down, left/right) and one or more gyroscopes can measure rotational movement (e.g., pitch, yaw, roll). In some embodiments, the sensors 255 detect the translational movement and the rotational movement, and determine an orientation and location of the HWD 250. In one aspect, the sensors 255 can detect the translational movement and the rotational movement with respect to a previous orientation and location of the HWD 250, and determine a new orientation and/or location of the HWD 250 by accumulating or integrating the detected translational movement and/or the rotational movement. Assuming for an example that the HWD 250 is oriented in a direction 25 degrees from a reference direction, in response to detecting that the HWD 250 has rotated 20 degrees, the sensors 255 may determine that the HWD 250 now faces or is oriented in a direction 45 degrees from the reference direction. Assuming for another example that the HWD 250 was located two feet away from a reference point in a first direction, in response to detecting that the HWD 250 has moved three feet in a second direction, the sensors 255 may determine that the HWD 250 is now located at a vector multiplication of the two feet in the first direction and the three feet in the second direction.

In some embodiments, the sensors 255 include eye trackers. The eye trackers may include electronic components or a combination of electronic components and software components that determine a gaze direction of the user of the HWD 250. In some embodiments, the HWD 250, the console 210 or a combination of them may incorporate the gaze direction of the user of the HWD 250 to generate image data for artificial reality. In some embodiments, the eye trackers include two eye trackers, where each eye tracker captures an image of a corresponding eye and determines a gaze direction of the eye. In one example, the eye tracker determines an angular rotation of the eye, a translation of the eye, a change in the torsion of the eye, and/or a change in shape of the eye, according to the captured image of the eye, and determines the relative gaze direction with respect to the HWD 250, according to the determined angular rotation, translation and the change in the torsion of the eye. In one approach, the eye tracker may shine or project a predetermined reference or structured pattern on a portion of the eye, and capture an image of the eye to analyze the pattern projected on the portion of the eye to determine a relative gaze direction of the eye with respect to the HWD 250. In some embodiments, the eye trackers incorporate the orientation of the HWD 250 and the relative gaze direction with respect to the HWD 250 to determine a gate direction of the user. Assuming for an example that the HWD 250 is oriented at a direction 30 degrees from a reference direction, and the relative gaze direction of the HWD 250 is -10 degrees (or 350 degrees) with respect to the HWD 250, the eye trackers may determine that the gaze direction of the user is 20 degrees from the reference direction. In some embodiments, a user of the HWD 250 can configure the HWD 250 (e.g., via user settings) to enable or disable the eye trackers. In some embodiments, a user of the HWD 250 is prompted to enable or disable the eye trackers.

In some embodiments, the wireless interface 265 includes an electronic component or a combination of an electronic component and a software component that communicates with the console 210. The wireless interface 265 may be or correspond to the wireless interface 122. The wireless interface 265 may communicate with a wireless interface 215 of the console 210 through a wireless communication link through the base station 110. Through the communication link, the wireless interface 265 may transmit to the console 210 data indicating the determined location and/or orientation of the HWD 250, and/or the determined gaze direction of the user. Moreover, through the communication link, the wireless interface 265 may receive from the console 210 image data indicating or corresponding to an image to be rendered and additional data associated with the image.

In some embodiments, the processor 270 includes an electronic component or a combination of an electronic component and a software component that generates one or more images for display, for example, according to a change in view of the space of the artificial reality. In some embodiments, the processor 270 is implemented as a part of the processor 124 or is communicatively coupled to the processor 124. In some embodiments, the processor 270 is implemented as a processor (or a graphical processing unit (GPU)) that executes instructions to perform various functions described herein. The processor 270 may receive, through the wireless interface 265, image data describing an image of artificial reality to be rendered and additional data associated with the image, and render the image to display through the electronic display 275. In some embodiments, the image data from the console 210 may be encoded, and the processor 270 may decode the image data to render the image. In some embodiments, the processor 270 receives, from the console 210 in additional data, object information indicating virtual objects in the artificial reality space and depth information indicating depth (or distances from the HWD 250) of the virtual objects. In one aspect, according to the image of the artificial reality, object information, depth information from the console 210, and/or updated sensor measurements from the sensors 255, the processor 270 may perform shading, reprojection, and/or blending to update the image of the artificial reality to correspond to the updated location and/or orientation of the HWD 250. Assuming that a user rotated his head after the initial sensor measurements, rather than recreating the entire image responsive to the updated sensor measurements, the processor 270 may generate a small portion (e.g., 10 %) of an image corresponding to an updated view within the artificial reality according to the updated sensor measurements, and append the portion to the image in the image data from the console 210 through reprojection. The processor 270 may perform shading and/or blending on the appended edges. Hence, without recreating the image of the artificial reality according to the updated sensor measurements, the processor 270 can generate the image of the artificial reality.

In some embodiments, the electronic display 275 is an electronic component that displays an image. The electronic display 275 may, for example, be a liquid crystal display or an organic light emitting diode display. The electronic display 275 may be a transparent display that allows the user to see through. In some embodiments, when the HWD 250 is worn by a user, the electronic display 275 is located proximate (e.g., less than 3 inches) to the user's eyes. In one aspect, the electronic display 275 emits or projects light towards the user's eyes according to image generated by the processor 270.

In some embodiments, the lens 280 is a mechanical component that alters received light from the electronic display 275. The lens 280 may magnify the light from the electronic display 275, and correct for optical error associated with the light. The lens 280 may be a Fresnel lens, a convex lens, a concave lens, a filter, or any suitable optical component that alters the light from the electronic display 275. Through the lens 280, light from the electronic display 275 can reach the pupils, such that the user can see the image displayed by the electronic display 275, despite the close proximity of the electronic display 275 to the eyes.

In some embodiments, the compensator 285 includes an electronic component or a combination of an electronic component and a software component that performs compensation to compensate for any distortions or aberrations. In one aspect, the lens 280 introduces optical aberrations such as a chromatic aberration, a pin-cushion distortion, barrel distortion, etc. The compensator 285 may determine a compensation (e.g., predistortion) to apply to the image to be rendered from the processor 270 to compensate for the distortions caused by the lens 280, and apply the determined compensation to the image from the processor 270. The compensator 285 may provide the predistorted image to the electronic display 275.

In some embodiments, the console 210 is an electronic component or a combination of an electronic component and a software component that provides content to be rendered to the HWD 250. In one aspect, the console 210 includes a wireless interface 215 and a processor 230. These components may operate together to determine a view (e.g., a FOV of the user) of the artificial reality corresponding to the location of the HWD 250 and the gaze direction of the user of the HWD 250, and can generate image data indicating an image of the artificial reality corresponding to the determined view. In addition, these components may operate together to generate additional data associated with the image. Additional data may be information associated with presenting or rendering the artificial reality other than the image of the artificial reality. Examples of additional data include, hand model data, mapping information for translating a location and an orientation of the HWD 250 in a physical space into a virtual space (or simultaneous localization and mapping (SLAM) data), eye tracking data, motion vector information, depth information, edge information, object information, etc. The console 210 may provide the image data and the additional data to the HWD 250 for presentation of the artificial reality. In other embodiments, the console 210 includes more, fewer, or different components than shown in FIG. 2. In some embodiments, the console 210 is integrated as part of the HWD 250.

In some embodiments, the wireless interface 215 is an electronic component or a combination of an electronic component and a software component that communicates with the HWD 250. The wireless interface 215 may be or correspond to the wireless interface 122. The wireless interface 215 may be a counterpart component to the wireless interface 265 to communicate through a communication link (e.g., wireless communication link). Through the communication link, the wireless interface 215 may receive from the HWD 250 data indicating the determined location and/or orientation of the HWD 250, and/or the determined gaze direction of the user. Moreover, through the communication link, the wireless interface 215 may transmit to the HWD 250 image data describing an image to be rendered and additional data associated with the image of the artificial reality.

The processor 230 can include or correspond to a component that generates content to be rendered according to the location and/or orientation of the HWD 250. In some embodiments, the processor 230 is implemented as a part of the processor 124 or is communicatively coupled to the processor 124. In some embodiments, the processor 230 may incorporate the gaze direction of the user of the HWD 250. In one aspect, the processor 230 determines a view of the artificial reality according to the location and/or orientation of the HWD 250. For example, the processor 230 maps the location of the HWD 250 in a physical space to a location within an artificial reality space, and determines a view of the artificial reality space along a direction corresponding to the mapped orientation from the mapped location in the artificial reality space. The processor 230 may generate image data describing an image of the determined view of the artificial reality space, and transmit the image data to the HWD 250 through the wireless interface 215. In some embodiments, the processor 230 may generate additional data including motion vector information, depth information, edge information, object information, hand model data, etc., associated with the image, and transmit the additional data together with the image data to the HWD 250 through the wireless interface 215. The processor 230 may encode the image data describing the image, and can transmit the encoded data to the HWD 250. In some embodiments, the processor 230 generates and provides the image data to the HWD 250 periodically (e.g., every 11 ms).

In one aspect, the process of detecting the location of the HWD 250 and the gaze direction of the user wearing the HWD 250, and rendering the image to the user should be performed within a frame time (e.g., 11 ms or 16 ms). A latency between a movement of the user wearing the HWD 250 and an image displayed corresponding to the user movement can cause judder, which may result in motion sickness and can degrade the user experience. In one aspect, the HWD 250 and the console 210 can prioritize communication for AR/VR, such that the latency between the movement of the user wearing the HWD 250 and the image displayed corresponding to the user movement can be presented within the frame time (e.g., 11 ms or 16 ms) to provide a seamless experience.

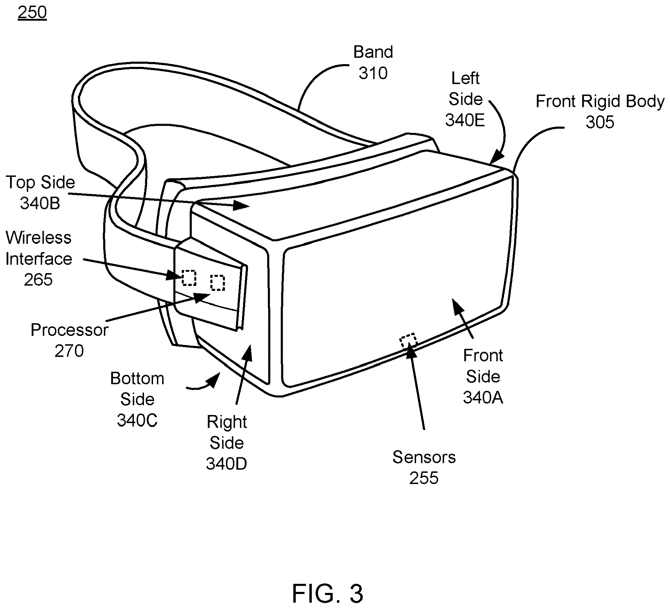

FIG. 3 is a diagram of a HWD 250, in accordance with an example embodiment. The HWD may comprise a front side 340A, a top side 340B, a bottom side 340C, a right side 340D and a left side 340E. In some embodiments, the HWD 250 includes a front rigid body 305 and a band 310. The front rigid body 305 includes the electronic display 275 (not shown in FIG. 3), the lens 280 (not shown in FIG. 3), the sensors 255, the wireless interface 265, and the processor 270. In the embodiment shown by FIG. 3, the wireless interface 265, the processor 270, and the sensors 255 are located within the front rigid body 205, and may not be visible externally. In other embodiments, the HWD 250 has a different configuration than shown in FIG. 3. For example, the wireless interface 265, the processor 270, and/or the sensors 255 may be in different locations than shown in FIG. 3.

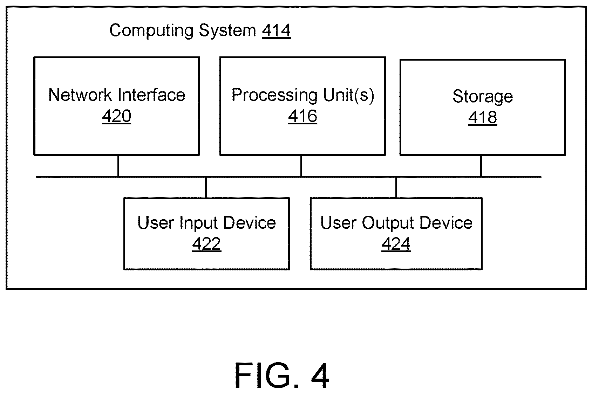

Various operations described herein can be implemented on computer systems. FIG. 4 shows a block diagram of a representative computing system 414 usable to implement the present disclosure. In some embodiments, the source devices 110, the sink device 120A, 120B, 120N, the console 210, the HWD 250 are implemented by the computing system 414. Computing system 414 can be implemented, for example, as a consumer device such as a smartphone, other mobile phone, tablet computer, wearable computing device (e.g., smart watch, eyeglasses, head wearable display), desktop computer, laptop computer, or implemented with distributed computing devices. The computing system 414 can be implemented to provide VR, AR, MR experience. In some embodiments, the computing system 414 can include conventional computer components such as processors 416, storage device 418, network interface 420, user input device 422, and user output device 424.

Network interface 420 can provide a connection to a wide area network (e.g., the Internet) to which WAN interface of a remote server system is also connected. Network interface 420 can include a wired interface (e.g., Ethernet) and/or a wireless interface implementing various RF data communication standards such as Wi-Fi, Bluetooth, or cellular data network standards (e.g., 3G, 4G, 5G, 60 GHz, LTE, etc.).

The network interface 420 may include a transceiver to allow the computing system 414 to transmit and receive data from a remote device using a transmitter and receiver. The transceiver may be configured to support transmission/reception supporting industry standards that enables bi-directional communication. An antenna may be attached to transceiver housing and electrically coupled to the transceiver. Additionally or alternatively, a multi-antenna array may be electrically coupled to the transceiver such that a plurality of beams pointing in distinct directions may facilitate in transmitting and/or receiving data.

A transmitter may be configured to wirelessly transmit frames, slots, or symbols generated by the processor unit 416. Similarly, a receiver may be configured to receive frames, slots or symbols and the processor unit 416 may be configured to process the frames. For example, the processor unit 416 can be configured to determine a type of frame and to process the frame and/or fields of the frame accordingly.

User input device 422 can include any device (or devices) via which a user can provide signals to computing system 414; computing system 414 can interpret the signals as indicative of particular user requests or information. User input device 422 can include any or all of a keyboard, touch pad, touch screen, mouse or other pointing device, scroll wheel, click wheel, dial, button, switch, keypad, microphone, sensors (e.g., a motion sensor, an eye tracking sensor, etc.), and so on.

User output device 424 can include any device via which computing system 414 can provide information to a user. For example, user output device 424 can include a display to display images generated by or delivered to computing system 414. The display can incorporate various image generation technologies, e.g., a liquid crystal display (LCD), light-emitting diode (LED) including organic light-emitting diodes (OLED), projection system, cathode ray tube (CRT), or the like, together with supporting electronics (e.g., digital-to-analog or analog-to-digital converters, signal processors, or the like). A device such as a touchscreen that function as both input and output device can be used. Output devices 424 can be provided in addition to or instead of a display. Examples include indicator lights, speakers, tactile "display" devices, printers, and so on.

Some implementations include electronic components, such as microprocessors, storage and memory that store computer program instructions in a computer readable storage medium (e.g., non-transitory computer readable medium). Many of the features described in this specification can be implemented as processes that are specified as a set of program instructions encoded on a computer readable storage medium. When these program instructions are executed by one or more processors, they cause the processors to perform various operation indicated in the program instructions. Examples of program instructions or computer code include machine code, such as is produced by a compiler, and files including higher-level code that are executed by a computer, an electronic component, or a microprocessor using an interpreter. Through suitable programming, processor 416 can provide various functionality for computing system 414, including any of the functionality described herein as being performed by a server or client, or other functionality associated with message management services.

It will be appreciated that computing system 414 is illustrative and that variations and modifications are possible. Computer systems used in connection with the present disclosure can have other capabilities not specifically described here. Further, while computing system 414 is described with reference to particular blocks, it is to be understood that these blocks are defined for convenience of description and are not intended to imply a particular physical arrangement of component parts. For instance, different blocks can be located in the same facility, in the same server rack, or on the same motherboard. Further, the blocks need not correspond to physically distinct components. Blocks can be configured to perform various operations, e.g., by programming a processor or providing appropriate control circuitry, and various blocks might or might not be reconfigurable depending on how the initial configuration is obtained. Implementations of the present disclosure can be realized in a variety of apparatus including electronic devices implemented using any combination of circuitry and software.

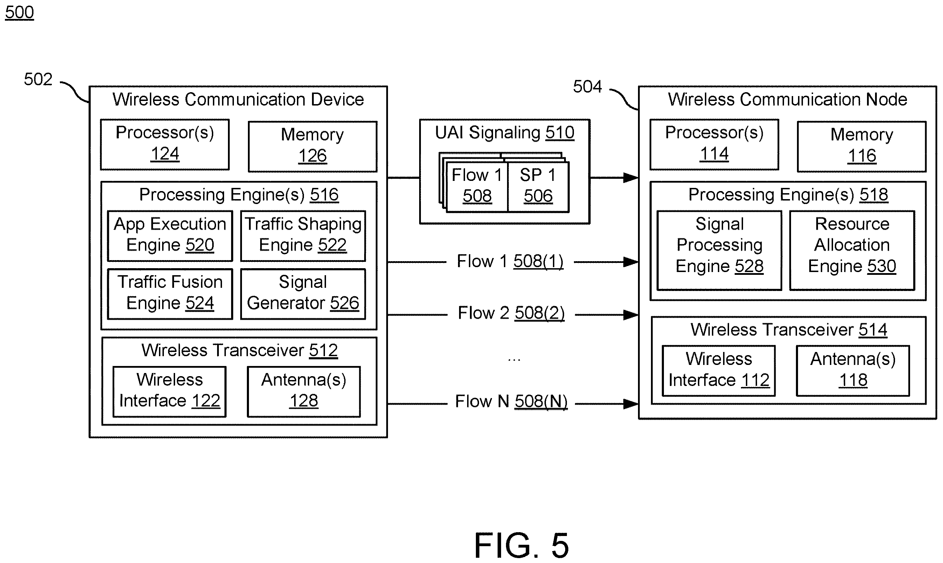

Referring now to FIG. 5, depicted is a system 500 for traffic flow shaping, according to an example implementation of the present disclosure. The system 500 may include a wireless communication device 502 communicably coupled to a wireless communication node 504. As described in greater detail below, the wireless communication device 502 may be configured to determine statistical parameters 506, for a plurality of traffic flows 508, for communication with the wireless communication node 504, where those traffic flows 508 may correspond to a resource, service, or application supported by the wireless communication device 502. The wireless communication device 502 may be configured to communicate, send, provide, or otherwise transmit one or more messages indicating the statistical parameters 506 for the plurality of traffic flows 508 to the wireless communication node 504. For example, the wireless communication device 502 may be configured to transmit the message(s) in one or more user equipment (UE) assistance information (UAI) signaling to the wireless communication node 504. The wireless communication node 504 may be configured to use the UAI signaling (e.g., indicating the statistical parameters 506 for the traffic flows 508) to allocate resources to the wireless communication device 502.

The wireless communication device 502 may be the same as or similar to the UE 120A, 120B, 120N, and the wireless communication node 504 may be the same as or similar to the base station 110, both described above with reference to FIG. 1 - FIG. 4. For example, the wireless communication device 502 and wireless communication node 504 may include respective processors 114, 124 and memory 116, 126 similar to the processors and memory described above. Additionally, the wireless communication device 502 and wireless communication node 504 may include wireless transceivers 512, 514 which include, respectively, a wireless interface 122, 112, and antenna(s) 128, 118. The wireless transceivers 512, 514 may facilitate, support or provide for wireless communication between the wireless communication device 502 and wireless communication node 504.

In various embodiments, wireless communication device 502 and wireless communication node 504 may exchange (e.g., transmit and/or receive) data which supports or otherwise corresponds to one or more applications, resources, or services executing on or supported by the wireless communication device 502. For example, the wireless communication device 502 may be configured to exchange data with the wireless communication node 504 that corresponds to an extended reality (XR) application / resource / service executing on or supported by the wireless communication device 502. Such data may include uplink data / traffic (e.g., traffic sent from the wireless communication device 502 to the wireless communication node 504) for transmission or provision to an endpoint (e.g., a resource server, another wireless communication device 502). Such data may also include downlink data / traffic (e.g., traffic received by the wireless communication node 504 for transmission to the wireless communication device 502).

In various embodiments, the uplink traffic may be sent via individual traffic flows 508 (e.g., flows 508 which correspond to or otherwise include traffic of a particular type, such as video traffic, audio traffic, pose traffic, control traffic, model traffic, and so forth). For example, a connection between the wireless communication device 502 and wireless communication node 504 may include a plurality of traffic flows 508(1) - (N), including, for instance, a traffic flow 508 for audio traffic, a traffic flow 508 for video traffic, a traffic flow 508 for pose traffic, a traffic flow 508 for control traffic, a traffic flow 508 for model (e.g., avatar model) traffic, and so forth. For a given resource / service / application, the traffic flows 508 may have different traffic characteristics or transmission conditions based on the type of information / data being exchanged or included in the traffic. For example, audio and video traffic may be more periodic (e.g., at a certain frequency or refresh rate) and may involve greater power demand. As another example, pose and control traffic may be more sensitive to latency, as delays in receipt of such traffic may decrease user experience due to lag. As yet another example, model traffic may be more sensitive to dropped packets. As described in greater detail below, the wireless communication device 502 may be configured to determine statistical parameters 506 for the traffic flows 508, where such statistical parameters correspond to traffic of the traffic flow 508. The wireless communication device 502 may be configured to generate UAI signaling to indicate the statistical parameters to the wireless communication node 504, such that the wireless communication node 504 can optimize / allocate resources of the connection based on such statistical parameters (e.g., to provide more bandwidth to power sensitive traffic flows 508, to increase throughput for latency-sensitive traffic flows 508, etc.).

The wireless communication device 502 and wireless communication node 504 may include respective processing engines 516, 518. The processing engines 516, 518 may be or include any device, component, element, or hardware designed or configured to perform various functions of the respective device. For example, the wireless communication device 502 may include an application (app) execution engine 520, a traffic shaping engine 522, a traffic fusion engine 524, and a signal generator 526. The wireless communication node 504 may include a signal processing engine 528 and a resource allocation engine 530. While these processing engine(s) 516, 518 are shown and described, it is noted that the present disclosure is not limited to these particular processing engine(s) 516, 518. For example, additional or alternative processing engines 516, 518 may be implemented by the respective devices. Similarly, one or more processing engines 516, 518 may be divided into multiple processing engines 516, 518, or two or more processing engines 516, 518 may be combined into a single processing engine 516, 518. Additionally, some processing engines 516, 518 may be locally executing, and other processing engines 516, 518 may be remotely executed.

The wireless communication device 502 may include an app execution engine 520. The app execution engine 520 may be configured to support, execute, provision, or otherwise provide a resource, service or application (generally referred to as an "app") on the wireless communication device 502. For example, the app execution engine 520 may be configured to execute a program or machine-readable instructions to provide the app to an end-user of the wireless communication device 502 (e.g., using various hardware of the wireless communication device 502, such as a display, speaker(s), sensor(s), input-output device(s), and so forth). The app execution engine 520 may be configured to support or provide different types of apps. For example, the app execution engine 520 may be configured to provide XR apps (e.g., augmented or virtual reality apps), telecommunications apps (e.g., audio or video calling apps, messaging apps), gaming apps, and so forth.

The apps supported by the app execution engine 520 may use or leverage a wireless communication link or channel between the wireless communication device 502 and wireless communication node 504, for exchanging data with an endpoint. For example, an audio or video calling app may leverage the wireless communication channel to exchange audio / video data between devices corresponding to users participating in an audio / video call. Additionally, certain apps may use or leverage the wireless communication channel to exchange different types of data, depending on the type of app, which may involve or entail different quality of service (QoS) metrics or properties. For instance, certain traffic types may be more power sensitive than other traffic types, certain traffic types may be more latency sensitive than other traffic types, and/or certain traffic types may be more reliability-sensitive than other traffic types. Further, certain traffic types may have different QoS properties depending on the type of app. For example, a traffic type (such as audio traffic) may be latency-sensitive for audio or video calling apps but may be power-sensitive for XR apps.

In various embodiments, the wireless communication link or channel may support or include multiple traffic flows 508 for each type of traffic used by the app. For example, the wireless communication channel may include a traffic flow 508 for each type of traffic, such as a traffic flow 508(1) for audio or video traffic, a traffic flow 508(2) for pose or control traffic, a traffic flow 508(N) for model traffic, and so forth. Each traffic flow 508 may be or include a stream of traffic (or data packets) which carry / include / correspond to a common type of traffic. As described in greater detail below, the wireless communication node 504 may be configured to allocate resource(s) to the traffic flows 508 based on or according to requirements / specifications / properties / parameters 506 of the traffic flows 508, which may be indicated in one or more UE assistance information (UAI) messages or signaling.

The wireless communication device 502 may include a traffic shaping engine 522. The traffic shaping engine 522 may be configured to determine, detect, or otherwise identify each of the traffic flows 508 which are to be used by the app execution engine 520 to support an app. In some embodiments, the traffic shaping engine 522 may be configured to identify each of the traffic flows 508 by cross-referencing the app or an app type of the app against a database or data structure to identify or determine the particular traffic flows 508 which are to be used by the app. In some embodiments, the traffic shaping engine 522 may be configured to identify each of the traffic flows 508 based on the request / response / negotiation of the wireless communication link between the device 502 and node 504 (e.g., based on requested traffic flows 508). In some embodiments, the traffic shaping engine 522 may be configured to identify each of the traffic flows based on source and destination internet protocol (IP) addresses, port numbers, protocol types, application signatures, etc.

The traffic shaping engine 522 may be configured to classify and/or shape the traffic flows 508. In some embodiments, the traffic shaping engine 522 may be configured to classify the traffic flows 508 by grouping together traffic flows 508 based on or according to traffic characteristics or transmission conditions. For example, the traffic shaping engine 522 may be configured to classify the traffic flows 508 by assigning each of the traffic flows 508 to a particular grouping based on traffic type, target / maximum / minimum / etc. data rate, burstiness, periodicity, latency, packet loss, power consumption, jitter, and so forth. In some embodiments, the traffic shaping engine 522 may be configured to group together traffic flows 508 based on the types of traffic sharing common traffic characteristics or transmission conditions. For example, for an XR app, the traffic shaping engine 522 may be configured to group together a video traffic flow 508 and an audio traffic flow 508 to a common category (e.g., a power-optimized category), based on the video traffic and audio traffic using more transmission power (e.g., due to power sensitivity relative to other types of traffic). As another example, the traffic shaping engine 522 may be configured to group together a pose traffic flow 508 and a control traffic flow 508 to a common category (e.g., a latency-optimized category), based on the pose and control traffic being more sensitive to latency and delay as compared to other types of traffic. As yet another example, the traffic shaping engine 522 may be configured to group together a model traffic flow 508 with a voice over IP (VoIP) traffic flow 508 to a common category (e.g., reliability-optimized), based on such traffic being more sensitive to packet drop or reliability as compared to other types of traffic.

In various embodiments, the traffic shaping engine 522 may be configured to group traffic flows 508 based on the particular app which is using or leveraging the wireless communication channel or link. For example, based on the particular application / resource / service executing on or supported by the wireless communication device 502 (e.g., via the app execution engine 520), different traffic flows 508 may be grouped differently. As one example, an audio traffic flow for a gaming app may be assigned to a power-sensitive classification, but may be assigned to a latency-sensitive classification for a VoIP app. In this regard, the traffic shaping engine 522 may be configured to group the traffic flows 508 based on the app or an app type of the app. Further, by grouping the traffic flows 508 differently based on the app / app type, the traffic fusion engine 524 may be configured to determine, identify, configure, or otherwise select different traffic properties / requirements / configurations / parameters for the traffic flows 508 based on the particular category to which the traffic flows 508 are assigned.

For each classification, the traffic shaping engine 522 may be configured to shape or combine similar flows within the class / classification. For example, the traffic shaping engine 522 may be configured to combine multiple flows 508 of a category within a single flow 508 based on the flows 508 sharing common characteristics / requirements / specifications / parameters / properties. In some embodiments, the traffic shaping engine 522 may be configured to apply one or more shaping policies to the traffic flows 508, based on current network conditions, app support requirements, congestion levels, and so forth. For example, the shaping policies may include/implement/trigger/utilize rate limiting, priority assignments, queue management, etc.

The wireless communication device 502 may include a traffic fusion engine 524. The traffic fusion engine 524 may be designed or configured to identify, select, configure, or otherwise determine one or more statistical parameters 506 for each class of traffic flows 508 (e.g., determined by the traffic shaping engine 522). The statistical parameters 506 may be or include QoS metrics / configurations / requirements, such as but not limited to QoS requirements relating to the traffic characteristics or transmission conditions used to classify such traffic flows 508. For example, the statistical parameters 506 may include a periodicity (e.g., min / max / average), jitter range, connected mode discontinuous reception (CDRX) periodicity, preferred uplink configuration grant offset, forward error correction (FEC) parameters, preferred packet data convergence protocol (PDCP) duplication configuration, and so forth.

In some embodiments, the traffic fusion engine 524 may be configured to determine the statistical parameters 506 based on the classification to which the traffic flows 508 are assigned. For instance, the traffic fusion engine 524 may be configured to determine the statistical parameters 506 for each traffic flow 508 assigned to a particular classification to be the same as other traffic flows 508 within the same classification, and may determine different statistical parameters 506 for other traffic flows 508 assigned to different classifications. In some embodiments, the traffic fusion engine 524 may be configured to assign different types of statistical parameters 506 to different classifications of traffic flows 508. For example, the types of statistical parameters 506 may be related to the particular requirements / configurations / etc. of the classification of traffic flows. Some non-limiting examples of types of statistical parameters 506 that may be assigned to a respective classification of traffic flows 508, along with the related types of traffic flows 508 which may be assigned to a respective classification, are provided in Table 1 below.

**Table 1. Example Statistical parameters per Classification of Traffic Flow(s)**

| Classification | Examples of Traffic Flows | Statistical parameters |
|---|---|---|
| Power-Optimized | Video Traffic Flow, Audio Traffic Flow | Periodicity, Jitter Range, Preferred CDRX Periodicity, etc. |
| Latency-Optimized | Pose Traffic Flow, Control Traffic Flow | Periodicity, Jitter Range, Preferred UL Configuration Grant Offset, etc. |
| Reliability-Optimized | Model Traffic Flow | FEC Parameters, Preferred PDCP Duplication Configuration, etc. |

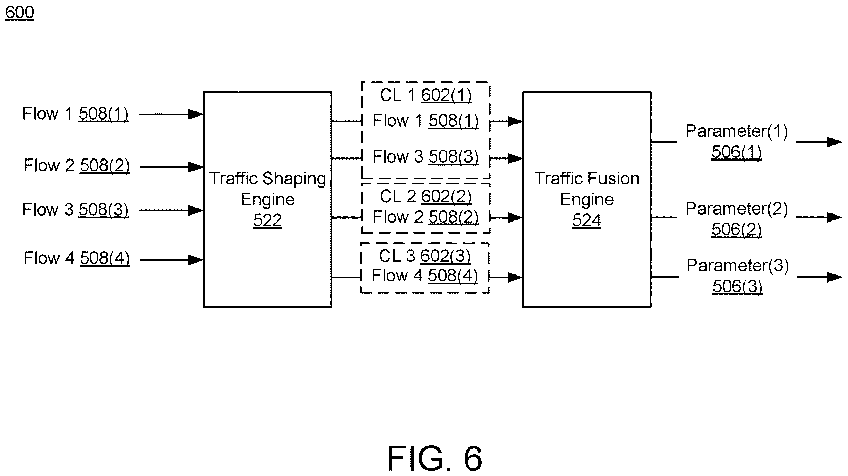

Referring to FIG. 6, depicted is a process flow 600 showing an example implementation in which the traffic shaping engine 522 and traffic fusion engine 524 may cooperate to determine statistical parameters 506 for traffic flows 508, according to an example implementation of the present disclosure. As shown in FIG. 6, the traffic shaping engine 522 may be configured to identify or otherwise determine each of the traffic flows 508 which are to be used or supported by the app execution engine 520 in providing an app to an end-user of the wireless communication device 502. In the example shown in FIG. 6, the traffic shaping engine 522 may identify four traffic flows 508(1)-508(4) which are to be used in connection with supporting the app. These traffic flows 508(1)-508(4) may be generally referred to as "raw" traffic flows 508.

The traffic shaping engine 522 may be configured to identify, determine, select, classify, or otherwise group each of the traffic flows 508 into a classification 602. In some embodiments, the traffic shaping engine 522 may be configured to group the traffic flows 508 into a classification 602 based on or according to the traffic characteristics or transmission conditions for the traffic which is to be sent on the traffic flow 508 and the app which is executing or provided by the app execution engine 520. The traffic shaping engine 522 may be configured to group the traffic flows 508 based on the traffic type, the data rate of the traffic, the data burstiness, the data periodicity, the maximum allowable latency, the maximum packet loss rate, minimum power, maximum jitter, and so forth. In the example shown in FIG. 6, the traffic shaping engine 522 may be configured to group the first and third traffic flows 508(1), 508(3) into one classification 602(1) (such as a power-optimized classification), group the second traffic flow 508(2) into another classification 602(2) (such as a latency-sensitive classification), and group the fourth traffic flow 508(4) into yet another classification 602(3) (such as a reliability-sensitive classification). In some embodiments, the traffic shaping engine 522 may be configured to assign various shaping values to the traffic flows 508 based on the corresponding classification. For example, the traffic shaping engine 522 may be configured to group similar traffic types together based on their similarities and correlations, and can shape the traffic by reforming two or more traffic flows 508 into a single traffic flow (such as forming one traffic flow 508 from the first and third traffic flows 508(1), 508(3)).

The traffic fusion engine 524 may be configured to receive the identified traffic flows 508 and corresponding classifications 602 from the traffic shaping engine 522. The traffic fusion engine 524 may be configured to define, select, configure, identify, or otherwise determine one or more statistical parameters 506 for each of the traffic flows 508. In some embodiments, the traffic fusion engine 524 may be configured to determine the statistical parameters 506 based on a particular classification to which the traffic flow 508 was assigned by the traffic shaping engine 522. For example, the traffic fusion engine 524 may be configured to determine the statistical parameters 506 using a look-up table in a data structure or database (e.g., similar to Table 1), based on the classification to which a traffic flow 508 is assigned. In this regard, the traffic fusion engine 524 may be configured to determine the statistical parameters 506 for the traffic flows 508 according to the classification.

Referring back to FIG. 5, the wireless communication device 502 may include a signal generator 526. The signal generator 526 may be designed or configured to produce, configure, establish, or otherwise provide one or more messages, communications, or signals which can indicate, identify, or otherwise provide the statistical parameters 506 for the traffic flows 508. In some embodiments, the signal generator 526 may be configured to provide a signal for each of the traffic flows 508, which identifies the statistical parameters 506 for the corresponding traffic flow 508. In some embodiments, the signal generator 526 may be configured to provide a signal for each category / classification of traffic flows 508, where the signal indicates the statistical parameters 506 which correspond to traffic flows 508 assigned to the respective classification. In some embodiments, the signal generator 526 may be configured to provide a signal for the wireless communication link or channel, where the signal identifies the statistical parameters 506 for each of the traffic flows 508 / classification of traffic flows.

In some embodiments, the signal generator 526 may be configured to generate the signal(s) as UE assistance information (UAI) signaling 510. As shown in FIG. 5, the UAI signaling 510 may include, for example, and identification associated with the particular flow(s) 508 and the corresponding statistical parameters (labeled as "SPs") 506. The UAI signaling 510 may include the statistical parameters 506 for the traffic flows 508, in addition to other information which may be included in UAI signaling 510, such as (but not limited to) device capabilities, measurement reports, location information, power / battery status information, usage patterns, etc. In some embodiments, the statistical parameters 506 may be included in configuration requests of UAI signaling 510.

The wireless communication device 502 may be configured to transmit, communicate, send, or otherwise provide the signal(s) (e.g., UAI signaling 510) to the wireless communication node 504 via the respective transceivers 512, 514. The wireless communication node 504 may include a signal processing engine 528 and a resource allocation engine 530. The signal processing engine 528 may be designed or configured to parse, inspect, analyze, or otherwise identify various information included in the signaling, such as the statistical parameters 506 identified for the traffic flows 508. The resource allocation engine 530 may be designed or configured to configure, select, define, or otherwise allocate network resources for the wireless communication link based on the statistical parameters 506. The signal processing engine 528 may be configured to identify the statistical parameters 506 for traffic flows 508 received from multiple UEs 502, and the resource allocation engine 530 may allocate resources to the different communication links with those respective UEs 502. In various embodiments, the resource allocation engine 530 may be configured to allocate resources by increasing a bandwidth for power-optimized traffic flows 508 (e.g., to increase a power availability for signaling via those respective traffic flows), by increasing a periodicity for latency-optimized traffic flows 508 (e.g., to increase a frequency in which data / information / packets can be sent to the wireless communication node 504 for transmission to an endpoint), etc.

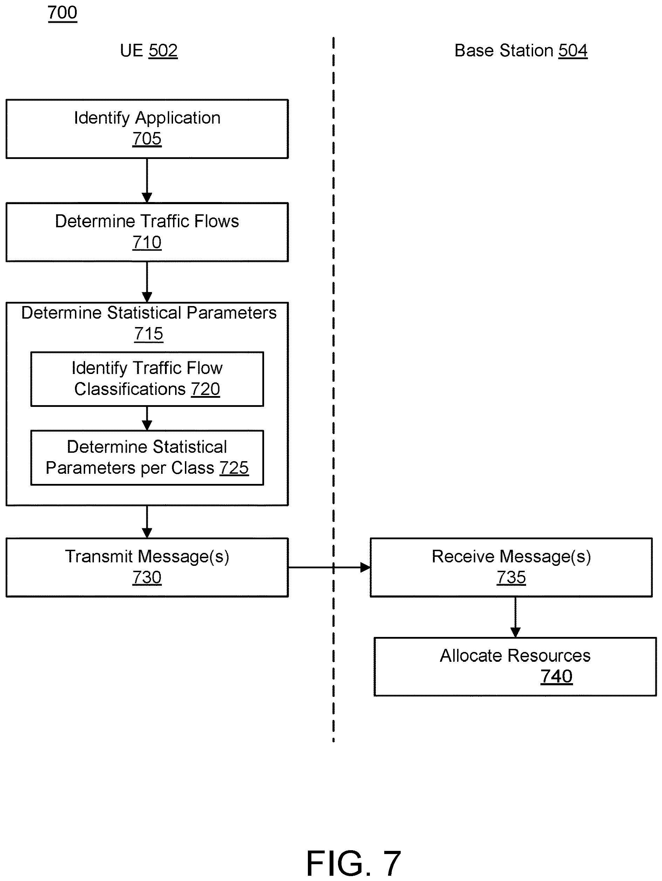

Referring to FIG. 7, depicted is a flowchart showing an example method 700 of traffic flow shaping, according to an example implementation of the present disclosure. The method 700 may be performed by the devices, components, elements, and hardware described above with reference to FIG. 1 - FIG. 6, such as the wireless communication device (or UE) 502, and/or the wireless communication node (or base station) 504. As a brief overview, at step 705, a UE 502 may identify an application. At step 710, the UE 502 may determine traffic flows. At step 715, the UE 502 may determine statistical parameters of the traffic flows, which may include step 720 where the UE 502 identifies traffic flow classifications and step 725 where the UE 502 determines statistical parameters per class. At step 730, the UE 502 may transmit one or more messages to the base station 504. At step 735, the base station 504 may receive the message(s) from the UE 502. At step 740, the base station 504 may allocate resources.

At step 705, a UE 502 may identify an application. In some embodiments, the UE 502 may identify an application which is executing, running, provisioned, or otherwise provided by the UE 502 to an end-user of the UE 502. The UE 502 may identify the application responsive to deployment of the application. At step 710, the UE 502 may determine traffic flows. In some embodiments, the UE 502 may determine traffic flows which are to be used by the application identified at step 705. In some embodiments, the UE 502 may determine the traffic flows which are to be used by the application for exchanging data relating to the application with an endpoint (e.g., another UE 502, an application server, etc.). The UE 502 may determine the traffic flows which are to carry application traffic of the application. In other words, the UE 502 may determine the traffic flows which correspond to the application supported by the UE 502 (e.g., the application determined at step 705). The traffic flows may include, for example, audio, video, pose, control, model, etc. traffic flows. The UE 502 may determine the traffic flows based on the application, based on the type of application, etc. For example, the UE 502 may determine the traffic flows based on requested resources or traffic flows as part of negotiation with the base station 504. As another example, the UE 502 may determine the traffic flows based on an application signature associated with the application. As yet another example, the UE 502 may determine the traffic flows based on requested services or capabilities that are used by the application.

At step 715, the UE 502 may determine statistical parameters of the traffic flows. In some embodiments, the UE 502 may determine, for the corresponding traffic flows determined at step 710, a respective set of statistical parameters for communication with the base station 504. The statistical parameters may be or include a periodicity, a jitter range, a preferred connected mode discontinuous reception periodicity, a preferred uplink configuration grant offset, forward error correction parameters, and/or preferred packet data convergence protocol (PDCP) duplication configuration parameters, to name a few non-limiting properties. In some embodiments, the UE 502 determines the statistical parameters according to a type of the application supported by the UE 502. For instance, the UE 502 may determine different statistical parameters for different types or application(s) which are supported by the UE 502. In other words, and in various instances, the statistical parameters determined for traffic flows of a first application supported by the UE 502 may be different than statistical parameters for the same traffic flows of a different application supported by the UE 502. Such implementations may thus provide optimized statistical parameters according to the particular application which is supported by the UE 502.

In some embodiments, determining the statistical parameters at step 715 may include the UE 502 identifying traffic flow classifications (at step 720). For example, the UE 502 may group together traffic flows into one or more classes, according to various traffic characteristics and/or transmission conditions, for traffic to be sent on the respective traffic flow. The traffic characteristics may include, for example, a traffic type, a data rate, a data burstiness, and/or a data periodicity. The transmission conditions may include, for example, a latency condition, a packet loss condition, a power consumption condition, and/or a jitter condition. The UE 502 may assign each traffic flow to a respective classification based on various combination(s) of the traffic characteristics and/or transmission conditions. The classification(s) may thus include sets of traffic flow(s) which are assigned to the respective classification. In other words, the UE 502 may identify or determine sets of traffic flow(s) (e.g., which are assigned to respective classifications). In various embodiments, the UE 502 may perform traffic shaping on the classified traffic flows. Such traffic shaping may include assigning priority, rate limiting, queue management, etc. settings or configurations to the classifications of traffic flows.

In some embodiments, determining the statistical parameters at step 715 may include the UE 502 determining statistical parameters per category (at step 725). In some embodiments, the UE 502 may determine different statistical parameters for each grouping or classification of traffic flows. In other words, the UE 502 may assign / configure / determine a first set of statistical parameters for a first grouping or classification of traffic flows, and may determine a second set of statistical parameters for a second grouping or classification of traffic flows (e.g., where the first and second set of statistical parameters are different). In some embodiments, the UE 502 may determine different types of statistical parameters for different groupings / classifications of traffic flows. For instance, the UE 502 may determine a first set of statistical parameters for a first grouping / classification / set of traffic flows, a second set of statistical parameters for a second grouping / classification / set of traffic flows, and a third set of statistical parameters for a third grouping / classification / set of traffic flows. For example, where the first set of traffic flows correspond to a power-optimized classification, the first set of statistical parameters may be or include a periodicity, a jitter range, and/or a preferred connected mode discontinuous reception periodicity. As another example, where the second set of traffic flows correspond to a latency-optimized classification, the second set of statistical parameters may be or include a periodicity, a jitter range, and/or a preferred uplink configuration grant offset. As yet another example, where the third set of traffic flows correspond to a reliability-optimized classification, the third set of statistical parameters may be or include forward error correction parameters and/or preferred packet data convergence protocol (PDCP) duplication configuration parameters.

At step 730, the UE 502 may transmit one or more messages to the base station 504. In some embodiments, the UE 502 may transmit, to the base station 504, one or more messages indicating the statistical parameters for the plurality of traffic flows. The UE may transmit the one or more messages in a UE assistance information (UAI) signaling. In some embodiments, the UE 502 may transmit the one or more messages in the UAI signaling prior to communication on the wireless communication channel / link. The UE 502 may transmit the one or more messages as part of negotiating the wireless communication channel / link. In some embodiments, the UE 502 may transmit the one or more messages responsive to deploying the app (e.g., following steps 705-725). In some embodiments, the UE 502 may transmit the one or more messages after the wireless communication channel / link has been established / communication is underway (e.g., as an update to previously-provided UAI signaling).

At step 735, the base station 504 may receive the message(s) from the UE 502. In some embodiments, the base station 504 may receive the message(s) included in the UAI signaling from the UE 502. The base station 504 may receive the message(s) as part of session negotiation and signaling, as part of session renegotiation, etc. At step 740, the base station 504 may allocate resources. In some embodiments, the base station 504 may allocate resources for the wireless communication channel / link based on the UAI signaling. For example, the base station 504 may allocate resources (such as bandwidth, periodicity, error-correction, etc.) for the wireless communication channel / link, based on the statistical parameters identified or included in the UAI signaling. In some embodiments, the base station may allocate resources to the individual traffic flows, based on the statistical parameters that correspond to the traffic flows (e.g., as reflected in the UAI signaling).

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements and features discussed in connection with one implementation are not intended to be excluded from a similar role in other implementations or implementations.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor or any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device, etc.) may include one or more devices (e.g., RAM, ROM, Flash memory, hard disk storage, etc.) for storing data and/or computer code for completing or facilitating the various processes, layers and modules described in the present disclosure. The memory may be or include volatile memory or nonvolatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit and/or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations disclosed herein.

Where technical features in the drawings, detailed description or any claim are followed by reference signs, the reference signs have been included to increase the intelligibility of the drawings, detailed description, and claims. Accordingly, neither the reference signs nor their absence has any limiting effect on the scope of any claim elements.

Systems and methods described herein may be embodied in other specific forms without departing from the characteristics thereof. References to "approximately," "about" "substantially" or other terms of degree include variations of +/-10% from the given measurement, unit, or range unless explicitly indicated otherwise. Coupled elements can be electrically, mechanically, or physically coupled with one another directly or with intervening elements. Scope of the systems and methods described herein is thus indicated by the appended claims, rather than the foregoing description.

The term "coupled" and variations thereof includes the joining of two members directly or indirectly to one another. Such joining may be stationary (e.g., permanent or fixed) or moveable (e.g., removable or releasable). Such joining may be achieved with the two members coupled directly with or to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References to "or" can be construed as inclusive so that any terms described using "or" can indicate any of a single, more than one, and all of the described terms. A reference to "at least one of 'A' and 'B'" can include only 'A', only 'B', as well as both 'A' and 'B'. Such references used in conjunction with "comprising" or other open terminology can include additional items.

Modifications of described elements and acts such as variations in sizes, dimensions, structures, shapes and proportions of the various elements, values of parameters, mounting arrangements, use of materials, colors, orientations can occur without materially departing from the teachings and advantages of the subject matter disclosed herein. For example, elements shown as integrally formed can be constructed of multiple parts or elements, the position of elements can be reversed or otherwise varied, and the nature or number of discrete elements or positions can be altered or varied. Other substitutions, modifications, changes and omissions can also be made in the design, operating conditions and arrangement of the disclosed elements and operations without departing from the scope of the appended claims.

References herein to the positions of elements (e.g., "top," "bottom," "above," "below") are merely used to describe the orientation of various elements in the FIGURES. The orientation of various elements may differ according to other exemplary embodiments, and that such variations are intended to be encompassed by the present disclosure.

## Claims

1. A method, comprising:
determining, by a user equipment, UE, for a plurality of traffic flows, a respective set of statistical parameters for communication with a base station, the plurality of traffic flows corresponding to an application supported by the UE; and
transmitting, by the UE, to the base station, one or more messages indicating the statistical parameters for the plurality of traffic flows in a UE assistance information, UAI, signaling.

2. The method of claim 1, wherein the plurality of traffic flows comprise traffic flows grouped together into sets of traffic flows according to at least one of traffic characteristics or transmission conditions, for traffic to be sent on the traffic flows included in a set; and preferably
wherein the traffic characteristics comprise at least one of a traffic type, a data rate, a data burstiness, or a data periodicity, and wherein the transmission conditions comprise at least one of a latency condition, a packet loss condition, a power consumption condition, or a jitter condition.

3. The method of claim 1 or claim 2, wherein the UE determines the statistical parameters according to a type of the application supported by the UE; and preferably
wherein statistical parameters of the plurality of traffic flows for a first application supported by the UE, is different from statistical parameters of the plurality of traffic flows for a second application supported by the UE.

4. The method of any preceding claim, wherein the plurality of traffic flows comprises a first set of one or more traffic flows and a second set of one or more traffic flows; and preferably
wherein the statistical parameters for the first set are different from the statistical parameters for the second set.

5. The method of any one of claims 1 to 3, wherein a first set of the statistical parameters is determined for a first set of traffic flows of the plurality of traffic flows, and wherein a second set of statistical parameters is determined for a second set of traffic flows of the plurality of traffic flows.

6. The method of any preceding claim, wherein the statistical parameters comprise at least one of a periodicity, a jitter range, a preferred connected mode discontinuous reception periodicity, a preferred uplink configuration grant offset, one or more forward error correction parameters, or one or more preferred packet data convergence protocol, PDCP, duplication configuration parameters.

7. The method of claim 1, wherein
a first set of statistical parameters for a first set of the plurality of traffic flows comprise a respective periodicity, a respective jitter range, and a preferred connected mode discontinuous reception periodicity,
a second set of statistical parameters for a second set of the plurality of traffic flows comprise a respective periodicity, a respective jitter range, and a preferred uplink configuration grant offset, and
a third set of statistical parameters for a third set of the plurality of traffic flows comprise one or more forward error correction parameters and one or more preferred packet data convergence protocol, PDCP, duplication configuration parameters.

8. A wireless communication device, comprising:
a wireless transceiver; and
one or more processors configured to:
determine, for a plurality of traffic flows, a respective set of statistical parameters for communication with a base station, the plurality of traffic flows corresponding to an application supported by the wireless communication device; and
transmit, via the wireless transceiver, to the base station, one or more messages indicating the statistical parameters for the plurality of traffic flows in a user equipment. UE, assistance information, UAI, signaling.

9. The wireless communication device of claim 8, wherein the plurality of traffic flows comprise traffic flows grouped together into sets of traffic flows according to at least one of traffic characteristics or transmission conditions, for traffic to be sent on the traffic flows included in a set.

10. The wireless communication device of claim 9, wherein the traffic characteristics comprise at least one of a traffic type, a data rate, a data burstiness, or a data periodicity, and wherein the transmission conditions comprise at least one of a latency condition, a packet loss condition, a power consumption condition, or a jitter condition.

11. The wireless communication device of any one of claims 8 to 10, wherein the one or more processors determine the statistical parameters according to a type of the application supported by the wireless communication device; and preferably
wherein statistical parameters of the plurality of traffic flows for a first application supported by the wireless communication device, is different from statistical parameters of the plurality of traffic flows for a second application supported by the wireless communication device.

12. The wireless communication device of any one of claims 8 to 11, wherein the plurality of traffic flows comprises a first set of one or more traffic flows and a second set of one or more traffic flows; and preferably
wherein the statistical parameters for the first set are different from the statistical parameters for the second set.

13. The wireless communication device of any one of claims 8 to 11, wherein a first set of the statistical parameters is determined for a first set of traffic flows of the plurality of traffic flows, and wherein a second set of statistical parameters is determined for a second set of traffic flows of the plurality of traffic flows.

14. The wireless communication device of any one of claims 8 to 13, wherein the statistical parameters comprise at least one of a periodicity, a jitter range, a preferred connected mode discontinuous reception periodicity, a preferred uplink configuration grant offset, one or more forward error correction parameters, or one or more preferred packet data convergence protocol, PDCP, duplication configuration parameters.

15. A base station, comprising:
a wireless transceiver; and
one or more processors configured to:
receive, via the wireless transceiver, from user equipment, UE, one or more messages indicating statistical parameters for a plurality of traffic flows in a UE assistance information, UAI, signaling,
wherein the statistical parameters are for communication between the UE and the base station, and wherein the plurality of traffic flows correspond to an application supported by the UE.
